# EUROPÄISCHE PATENTANMELDUNG

(11) **EP 1 528 817 A1**
(43) Veröffentlichungstag der Anmeldung: **04.05.2005**
(21) Anmeldenummer: 03024713.4
(22) Anmeldetag: 28.10.2003
(51) Int. Cl.: H04Q 3/00, H04M 3/42, H04M 3/22, H04L 12/24

(54) **Verfahren zur Administration von Konfigurationsdaten für Telekommunikationsdienste**

(71) Anmelder: Tenovis GmbH & Co. KG, 60326 Frankfurt am Main (DE)
(72) Erfinder: Shmidt, Ralf, 55262 Heidesheim (DE); Hemmerich, Thomas, 63477 Maintal (DE); Meister, Gerd, 64291 Darmstadt (DE)
(74) Vertreter: Thul, Hermann, Dipl.-Phys.

(57) **Zusammenfassung**

In einem Verfahren zur Administration von Konfigurationsdaten für Dienste mit Hilfe einer Management Applikation (18, 62), wobei die Management Applikation als Schichten eine Bedienoberfläche (27, 28), eine Business Logic (22) und einen Datenzugriff (24) auf einen dauerhaften Datenspeicher (26) aufweist, wird ein Kundenindex (52, 54) in den Schichten der Management Applikation eingeführt, mit dem für mehrere Kunden (12, 14) mit derselben Management Applikation eine kundenspezifische Konfiguration erfolgt, wobei die Konfigurationsdaten in kundeneigenen Konfigurationsdatenbereichen (34, 36, 68, 69, 70) in einem gemeinsamen Datenspeicher (26) abgelegt werden. Die Erfindung ermöglicht eine Transformation einer Applikation mit zugeordneter Management Applikation von einem Ein-Kunden-System zu einem Mehr-Kunden-System mit wenig Modifikationen.

## Beschreibung

Die Erfindung betrifft ein Verfahren zur Administration von Konfigurationsdaten für Dienste mit Hilfe einer Management Applikation, wobei die Management Applikation als Schichten eine Bedienoberfläche, eine Business Logic und einen Datenzugriff auf einen dauerhaften Datenspeicher aufweist.

Nach dem Stand der Technik werden von einem Dienstleister Dienste für mehrere Kunden angeboten, wobei die Kunden jeweils eine Gruppe von Teilnehmern aufweisen, welche die Dienste innerhalb eines Kunden-Netzwerks nutzen können. Die Kunden-Netzwerke sind mit übergeordneten Netzwerken verbunden, und somit über übergeordnete Netzwerke auch mit ihrem Dienstleister sowie dritten Dienstleistern und deren Kunden. Die Teilnehmer können Dienste in individuellem Umfang in Anspruch nehmen, wobei die Dienste in individuellem Umfang abgerechnet werden. Dabei legt ein Kunde für seine Teilnehmer jeweils den individuellem Umfang der Dienste fest in Form einer Dienste-Auswahl. Ein Administrator des Dienstleisters nimmt eine Konfiguration des Kunden-Netzwerks vor, wobei er die Teilnehmer entsprechend der Dienste-Auswahl mit entsprechenden Berechtigungen einrichtet.

Beispielsweise legt eine Firma für jeden ihrer Mitarbeiter den Umfang von Telekommunikationsdiensten fest, den der jeweilige Mitarbeiter im Firmennetzwerk nutzen kann, und wofür die Firma jeweils ein Entgeld an den das Firmennetzwerk betreibenden Dienstleister entrichtet. Die Telekommunikationsdienste können Leistungsmerkmale einer Telefonanlage oder eines Computernetzwerks umfassen, die jeweils an ein öffentliches Netzwerk angeschlossen sind. Falls eine Firma eine Telefonanlage selber betreibt, so fallen Kunde und Dienstleister zusammen und der Administrator ist innerhalb der Firma.

Telefonanlagen stellen den an sie angeschlossenen Teilnehmern bzw. Endgeräten Leistungsmerkmale zur Verfügung. Große private Telekommunikationsanlagen (TK-Anlagen) erreichen heute Ausbaustufen von über 10.000 Teilnehmern. Telekommunikationsanlagen dieser Größenordnungen bieten nicht nur ein breites Spektrum von vermittlungstechnischen Leistungsmerkmalen, welches die Möglichkeiten kleiner Telekommunikationssysteme bei Weitem übersteigt, sie bieten darüber hinaus Zugang zu serverbasierten Diensten in Form von Applikationen wie CTI (Computer Telephony Integration), CRM (Customer Relations Management) und Call Center.

Die Dienste bzw. Leistungsmerkmale in Telefonienetzen und in Computernetzen sind unterschiedlich aufwändig zu implementieren. Komplizierte vermittlungstechnische Leistungsmerkmale und serverbasierte Applikationen erfordern einen großen Realisierungsaufwand, der sich für kleinere Anschlusszahlen oft als unwirtschaftlich erweist, so dass derartige Leistungsmerkmale in kleinen Netzen nicht oder nur selten zu finden sind. Es bestehen daher Ansätze, die Dienste bzw. Leistungsmerkmale großer Telefonienetze und in Computernetze für viele Kunden mit jeweils eigenen Teilnehmergruppen zentral bereitzustellen und so die Kosten der Leistungsmerkmale pro Teilnehmer in wirtschaftliche Bereiche zu führen.

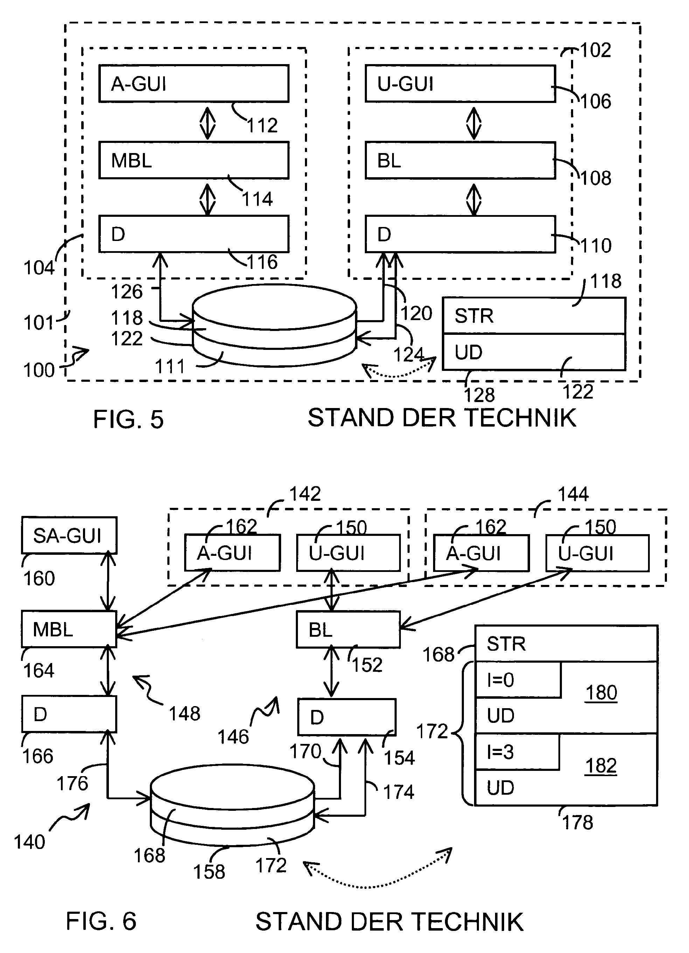

FIG. 5 zeigt schematisch ein Ein-Kunden-System zur Administration von Konfigurationsdaten für Dienste und zur Bereitstellung der Dienste gemäß dem Stand der Technik. In einem System 100 werden innerhalb eines Kunden 101, z. B. einer Firma, Dienste mittels einer Applikation 102 bereitgestellt bzw. erbracht und mittels einer Management Applikation 104 konfiguriert. Die Applikation 102 weist als Schichten eine von einem Benutzer bediente Bedienoberfläche (U-GUI) 106, eine Business Logic (BL) 108 und einen Datenzugriff (D) 110 auf einen dauerhaften Datenspeicher 111 auf. Die Management Applikation 104 weist als Schichten eine von einem Kundenadministrator bediente Management Bedienoberfläche (A-GUI) 112, eine Management Business Logic (MBL) 114 und einen Datenzugriff (D) 116 auf den dauerhaften Datenspeicher 111 auf. Die Konfiguration der Applikation 102 erfolgt mit Konfigurationsdaten für Dienste als Strukturdaten (STR), die mittels Datenzugriff 116 in einem Strukturdatenbereich 118 des Datenspeichers 111 dauerhaft abgelegt sind. Die Konfigurationsdaten enthalten Daten über das System, die dem Benutzer nicht zugänglich sind, beispielsweise die Hardwarekonfiguration und Berechtigungen aller Benutzer. Die Business Logic 108 greift im Betrieb auf die Konfigurationsdaten lesend zu, dargestellt durch Pfeil 120. Entsprechend der Konfiguration und der darin enthaltenen Benutzerberechtigungen nutzen die Benutzer Dienste mit Benutzerdaten (UD), die mittels Datenzugriff 110 in einem Benutzerdatenbereich 122 des Datenspeichers 111 dauerhaft abgelegt werden. Der Datenzugriff 110 der Applikation 102 auf Benutzerdaten ist bidirektional, dargestellt durch Pfeil 124. Der Datenzugriff 116 der Management Applikation 104 auf Konfigurationsdaten ist bidirektional, dargestellt durch den den Informationsfluss darstellenden Pfeil 126. Die Organisation 128 des Datenspeichers ist derart, dass Strukturdaten und Benutzerdaten in getrennten Bereichen 118 und 122 abgelegt sind. Dadurch wird ein unberechtigter Zugriff des Administrators auf Benutzerdaten und ein unberechtigter Zugriff des Benutzers auf Strukturdaten verhindert. Administrator und Benutzer können zum selben Kunden des Anbieters der Applikation gehören. Das Ein-Kunden-Systems ist in bezug auf Leistung und Kosten zur Benutzung durch einen Kunden optimiert und kann nicht einfach zu einem Mehr-Kunden-System umgestaltet werden.

FIG. 6 zeigt schematisch ein Mehr-Kunden-System zur Administration von Konfigurationsdaten für Dienste und zur Bereitstellung der Dienste gemäß dem Stand der Technik. Im System 140 werden für mehrere Kunden 142, 144, z. B. Firmen, Dienste mittels einer Applikation 146 zentral bereitgestellt bzw. erbracht und mittels einer Management Applikation 148 zentral konfiguriert. Zentral bedeutet hier, dass die Datenhaltung und die wesentliche Rechenleistung bei der Erbringung des Dienstes an einer zentralen Stelle erfolgt. Die Applikation 146 weist als Schichten eine von einem Benutzer bediente und bei jedem Benutzer ablaufende Bedienoberfläche (U-GUI) 150, eine zentrale Business Logic (BL) 152 und einen zentralen Datenzugriff (D) 154 auf einen dauerhaften Datenspeicher 158 auf. Die Management Applikation 148 weist als Schichten eine Management Bedienoberfläche, bestehend aus einer von einem Systemadministrator bediente Systemadministrator Bedienoberfläche (SA-GUI) 160 und einer von einem Kundenadministrator bediente Kundenadministrator Bedienoberfläche (A-GUI) 162, eine zentrale Management Business Logic (MBL) 164 und einen zentralen Datenzugriff (D) 166 auf den dauerhaften Datenspeicher 158 auf. Sowohl die Bedienoberfläche 150 als auch die Kundenadministrator Bedienoberfläche 162 können bei jedem Kunden 142, 144 entsprechend der Administratoren- und der Benutzerzahl mehrfach vorhanden sein.

Die Konfiguration der Applikation 146 erfolgt mit Konfigurationsdaten für Dienste als Strukturdaten (STR), die mittels Datenzugriff 166 in einem Strukturdatenbereich 168 des Datenspeichers 158 dauerhaft abgelegt sind. Die Konfigurationsdaten enthalten Daten über das System, die dem Benutzer nicht zugänglich sind, beispielsweise die Hardwarekonfiguration und Berechtigungen aller Benutzer. Die Business Logic 152 greift im Betrieb auf die Konfigurationsdaten lesend zu, dargestellt durch den den Informationsfluss darstellenden Pfeil 170. Entsprechend der Konfiguration und der darin enthaltenen Benutzerberechtigungen nutzen die Benutzer Dienste mit Benutzerdaten (UD), die mittels Datenzugriff 154 in einem Benutzerdatenbereich 172 des Datenspeichers 158 dauerhaft abgelegt werden. Der Datenzugriff 154 der Applikation 146 auf Benutzerdaten ist bidirektional, dargestellt durch Pfeil 174. Der Datenzugriff 166 der Management Applikation 164 auf Konfigurationsdaten ist bidirektional, dargestellt durch Pfeil 176. Die Organisation 178 des Datenspeichers ist derart, dass Strukturdaten und Benutzerdaten in getrennten Bereichen 168 und 172 abgelegt sind. Die Benutzerdaten im Benutzerdatenbereich 172 sind wiederum in durch einen Laufindex I kundenweise in verschiedenen Kundendatenteilbereichen 180, 182 abgelegt. Dadurch wird ein unberechtigter Zugriff eines Administrators auf Benutzerdaten und ein unberechtigter Zugriff des Benutzers auf Strukturdaten verhindert. Ebenso wird ein unberechtigter Zugriff eines Benutzers eines Kunden auf Benutzerdaten eines Benutzers eines anderen Kunden verhindert. Das Mehr-Kunden-System ist in bezug auf Leistung und Kosten zur Benutzung durch viele Kunden optimiert. Die zentrale Bereitstellung der Business Logic und der Datenhaltung erlauben eine rationale Verwendung von Ressourcen, die nicht nur eine geringere Anzahl von Hardware Einheiten erlaubt, sondern durch eine geeignete Softwarestruktur Ressourcen dynamisch optimal nutzen kann. Außerdem weisen zentrale Systeme häufig aufwendige Leistungsmerkmale auf, die bei Ein-Kunden-Systemen aus Kostengründen nicht zu finden sind. Das Mehr-Kunden-System ist in bezug auf die Softwarestruktur derart konzipiert, dass viele unabhängige Kunden sicher, parallel zueinander und unabhängig voneinander, d.h. frei von gegenseitigen Störungen, arbeiten können.

Dienste und Applikationen nach dem Stand der Technik sind derart ausgelegt, dass ein Administrator Teilnehmer einrichtet, wobei in einer Applikation nur Teilnehmer eines einzigen Kunden vorkommen oder ein nicht zu einem Kunden gehörender Administrator Teilnehmergruppen verschiedener Kunden getrennt voneinander verwaltet. Dienste und Applikationen, insbesondere serverbasierte Applikationen sind nicht darauf ausgelegt, rechtlich unabhängige Kunden völlig getrennt voneinander derart zu verwalten, dass jeweils ein zu einem Kunden gehörender Administrator die zu diesem Kunden gehörende Teilnehmergruppe verwaltet, und zwar auf einem für viele Kunden gemeinsam bereitgestellten Server. Nach heutigem Stand der Technik wären die Management Applikationen für mehrere Kunden zentral bereitgestellte Dienste speziell wegen der Anforderung nach einer umfassenden Mandantenfähigkeit, d.h. der verwaltungs- und datenbezogenen Trennung verschiedener Kunden, zumindest in weiten Teilen ihrer Software neu zu entwickeln.

Es ist daher die Aufgabe der vorliegenden Erfindung, ein Verfahren zur Administration von Konfigurationsdaten für Dienste mit Hilfe einer Management Applikation bereitzustellen, wobei jeweils ein zu einem Kunden gehörender Administrator die zu diesem Kunden gehörende Teilnehmergruppe verwaltet, und zwar auf einem für viele Kunden gemeinsam bereitgestellten Server.

Diese Aufgabe wird durch das Verfahren mit den Merkmalen des unabhängigen Patentanspruchs gelöst. Bevorzugte Ausgestaltungen der Erfindung ergeben sich aus den abhängigen Ansprüchen.

In einem erfindungsgemäßen Verfahren zur Administration von Konfigurationsdaten für Dienste mit Hilfe einer Management Applikation, wobei die Management Applikation als Schichten eine Bedienoberfläche, eine Business Logic und einen Datenzugriff auf einen dauerhaften Datenspeicher aufweist, wird ein Kundenindex in den Schichten der Management Applikation eingeführt, mit dem für mehrere Kunden mit derselben Management Applikation eine kundenspezifische Konfiguration erfolgt, wobei die Konfigurationsdaten in kundeneigenen Konfigurationsdatenbereichen in einem gemeinsamen Datenspeicher abgelegt werden.

Damit können zu verschiedenen Kunden gehörende Teilnehmergruppen völlig getrennt voneinander verwaltet werden, derart, dass jeweils ein zu einem Kunden gehörender Administrator die zu diesem Kunden gehörende Teilnehmergruppe verwaltet, und zwar auf einem für viele Kunden gemeinsam bereitgestellten Server. Die Erfindung ermöglicht somit eine Applikation für ein Ein-Kunden-System mit wenig zusätzlichem Aufwand in eine Applikation für ein Mehr-Kunden-System zu migrieren, ohne dass ein Mehr-Kunden-System wie nach dem Stand der Technik üblich neu entwickelt werden muss. Daher kann ausgehend von einem bestehenden Ein-Kunden-System Service Provisioning schneller und kostengünstiger angeboten werden. Es werden viele, durchaus hunderte, von Mannjahren Entwicklungsarbeit eingespart.

Service Provisioning ermöglicht ein kostengünstiges Bereitstellen von Diensten für viele Kunden mit jeweils vielen Benutzern. Dies wird ermöglicht durch gemeinsame Benutzung von aufwändigen Ressourcen durch viele Kunden in Verbindung mit einer effizienten Verwaltung der Dienste, wobei die Dienste in bezug auf Leistungsmerkmale kundenindividuell gestaltbar sind, was wiederum eine Abrechnung nach genutzte Leistung erlaubt bei sehr geringen Infrastrukturkosten. Die vorliegende Erfindung ermöglicht nun ein Service Provisioning von Diensten, die bisher nur als normale Dienste in einem Ein-Kunden-System erbracht wurden. Dazu migriert der Dienst bzw. eine Applikation für ein Ein-Kunden-System in eine Applikation für ein Mehr-Kunden-System, wobei der Dienst nun zentral erbracht wird. Zentral bedeutet hier, dass die Datenhaltung und die wesentliche Rechenleistung bei der Erbringung des Dienstes an einer zentralen Stelle erfolgt, also die Applikation zentral abläuft. Der Dienst wird mehrkundenfähig gemacht, derart dass die Konfiguration des Dienstes mittels einer Management Applikation kundenindividuell gestaltet werden kann. Die Erfindung ermöglicht eine Transformation einer Applikation mit zugeordneter Management Applikation von einem Ein-Kunden-System zu einem Mehr-Kunden-System mit wenig Modifikationen.

Die kundenindividuelle Konfiguration wird vorteilhaft vorgenommen durch einen Kundenadministrator, durch einen Systemadministrator, oder durch beide. Der Kundenadministrator oder der Systemadministrator identifiziert sich vorzugsweise gegenüber der Management Applikation durch ein Account mittels User und Passwort.

Vorteilhaft erfolgt eine kundenspezifische Konfiguration durch einen Kundenadministrator oder einen Systemadministrator, wobei beide dieselbe Management Applikation benutzen, nämlich identische Softwareabschnitte.

Vorteilhaft erfolgt eine kundenspezifische Konfiguration durch einen Systemadministrator, wobei ein Kunde mittels einer Auswahl-Maske ausgewählt wird.

Die Management Applikation wird vorzugsweise zur Konfiguration eines den dauerhaften Datenspeicher aufweisenden Feature-Servers eingesetzt, vorteilhaft zur Konfiguration eines Feature-Servers für Kommunikationsdienste, insbesondere für Telefonie-Dienste oder Sprach-Dienste.

Weitere vorteilhafte Ausführungsformen ergeben sich aus den Unteransprüchen und aus der nachfolgenden Beschreibung eines bevorzugten Ausführungsbeispiels, das anhand der Abbildungen näher erläutert wird. Hierbei zeigen:
FIG. 1 eine schematische Darstellung eines Systems zur Administration von Konfigurationsdaten für Dienste und zur Bereitstellung der Dienste gemäß der Erfindung;
FIG. 2 eine schematische Darstellung der Datenhaltung eines Systems zur Administration von Konfigurationsdaten für Dienste gemäß der Erfindung, wobei die Dienste von einer externen Applikation bereitgestellt werden;
FIG. 3 ein Message Sequence Chart eines Verfahrens zur Administration von Konfigurationsdaten für Dienste gemäß der Erfindung, wobei die Administration durch einen Kundenadministrator erfolgt;
FIG. 4 ein Message Sequence Chart eines Verfahrens zur Administration von Konfigurationsdaten für Dienste gemäß der Erfindung, wobei die Administration durch einen Systemadministrator erfolgt;
FIG. 5 eine schematische Darstellung eines Ein-Kunden-Systems zur Administration von Konfigurationsdaten für Dienste und zur Bereitstellung der Dienste gemäß dem Stand der Technik; und
FIG. 6 eine schematische Darstellung eines Mehr-Kunden-Systems zur Administration von Konfigurationsdaten für Dienste und zur Bereitstellung der Dienste gemäß dem Stand der Technik.

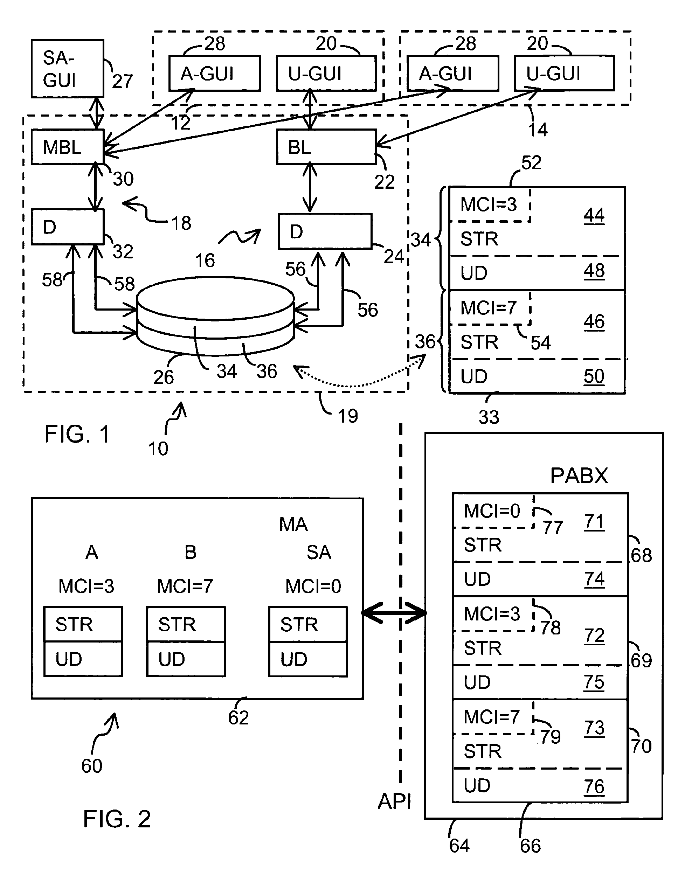

FIG. 1 zeigt schematisch ein erfindungsgemäßes Mehr-Kunden-System 10 zur Administration von Konfigurationsdaten für Dienste und zur Bereitstellung der Dienste. Im System 10 werden für mehrere Kunden 12, 14, z. B. Firmen, Dienste mittels einer Applikation 16 zentral bereitgestellt bzw. erbracht und mittels einer Management Applikation 18 zentral konfiguriert. Zentral bedeutet hier, dass die Datenhaltung und die wesentliche Rechenleistung bei der Erbringung des Dienstes an einer zentralen Stelle, dem Back Office BO 19 erfolgt. Die Applikation 16 weist als Schichten eine von einem Benutzer bediente und bei jedem Benutzer ablaufende Bedienoberfläche (U-GUI) 20, eine zentrale Business Logic (BL) 22 und einen zentralen Datenzugriff (D) 24 auf einen dauerhaften Datenspeicher 26 auf. Die Management Applikation 18 weist als Schichten eine Management Bedienoberfläche, bestehend aus einer von einem Systemadministrator bediente Systemadministrator Bedienoberfläche (SA-GUI) 27 und einer von einem Kundenadministrator bediente Kundenadministrator Bedienoberfläche (A-GUI) 28, eine zentrale Management Business Logic (MBL) 30 und einen zentralen Datenzugriff (D) 32 auf den dauerhaften Datenspeicher 26 auf. Sowohl die Benutzer Bedienoberfläche 20 als auch die Kundenadministrator Bedienoberfläche 28 können bei jedem Kunden 12, 14 entsprechend der Administratoren- und der Benutzerzahl mehrfach vorhanden sein.

Die Applikation 16 und die zugehörige Management Applikation 18 basieren auf einem Ein-Kunden-System und sind erfindungsgemäß für ein Mehr-Kunden-System modifiziert worden, wobei der Dienst nun zentral erbracht wird. Die Daten aller Kunden sind zentral abgelegt. Die Organisation 33 des Datenspeichers ist derart, dass für jeden Kunden ein Kundendatenbereich 34, 36 auf dem dauerhaften Datenspeicher 26 eingerichtet ist. Jeder Kundendatenbereich 34, 36 enthält Strukturdaten (STR) in einem Strukturdatenabschnitt 44, 46 und Benutzerdaten (UD) in einem Benutzerdatenabschnitt 48, 50. Die Kundendatenbereiche 34, 36 sind wiederum über einen Kundenindex MCI 52, 54 ihren jeweiligen Kunden zugeordnet.

Die Konfiguration des Dienstes kann mittels der Management Applikation 18 kundenindividuell gestaltet werden, wahlweise über die Systemadministrator Bedienoberfläche 27 oder die Kundenadministrator Bedienoberfläche 28. Die Konfiguration der Applikation 16 erfolgt mit Konfigurationsdaten für Dienste als Strukturdaten. Die Konfigurationsdaten enthalten Daten über das System, die dem Benutzer nicht zugänglich sind, beispielsweise die Hardwarekonfiguration und Berechtigungen aller Benutzer.

Die Business Logic 22 greift im Betrieb auf die Kundendatenbereiche 34, 36 zu, und zwar lesend in den Strukturdatenabschnitten 44, 46 und lesend und schreibend in den Benutzerdatenabschnitten 48, 50, dargestellt durch die den Informationsfluss darstellenden Pfeile 56. Entsprechend der Konfiguration und der darin enthaltenen Benutzerberechtigungen nutzen die Benutzer Dienste mit Benutzerdaten, die mittels Datenzugriff 24 in den Benutzerdatenabschnitten 48, 50 der Kundendatenbereiche 34, 36 des Datenspeichers 26 dauerhaft abgelegt werden. Der Datenzugriff 24 der Applikation 16 auf Benutzerdaten ist bidirektional, dargestellt durch Pfeile 56.

Die Management Business Logic (MBL) 30 greift bei der Konfiguration auf die Strukturdaten in den Strukturdatenabschnitten 44, 46 der Kundendatenbereiche 34, 36 lesend und schreibend zu. Der Datenzugriff 32 der Management Applikation 18 auf Konfigurationsdaten ist bidirektional, dargestellt durch Pfeile 58.

Durch die Datenhaltung in getrennten Kundendatenbereichen 34, 36 wird ein unberechtigter Zugriff durch Kundenadministratoren oder Benutzer eines Kunden auf Daten eines anderen Kunden verhindert. Durch die Datenhaltung in getrennten Strukturdatenabschnitten 44, 46 und Benutzerdatenabschnitten 48, 50 wird ein unberechtigter Zugriff eines Benutzers auf Strukturdaten und eines Kundenadministrators auf Benutzerdaten verhindert. Das Mehr-Kunden-System ist in bezug auf kurze Entwicklungszeit, Leistung und Kosten zur Benutzung durch viele Kunden optimiert. Die zentrale Bereitstellung der Business Logic und der Datenhaltung erlauben eine rationale Verwendung von Ressourcen.

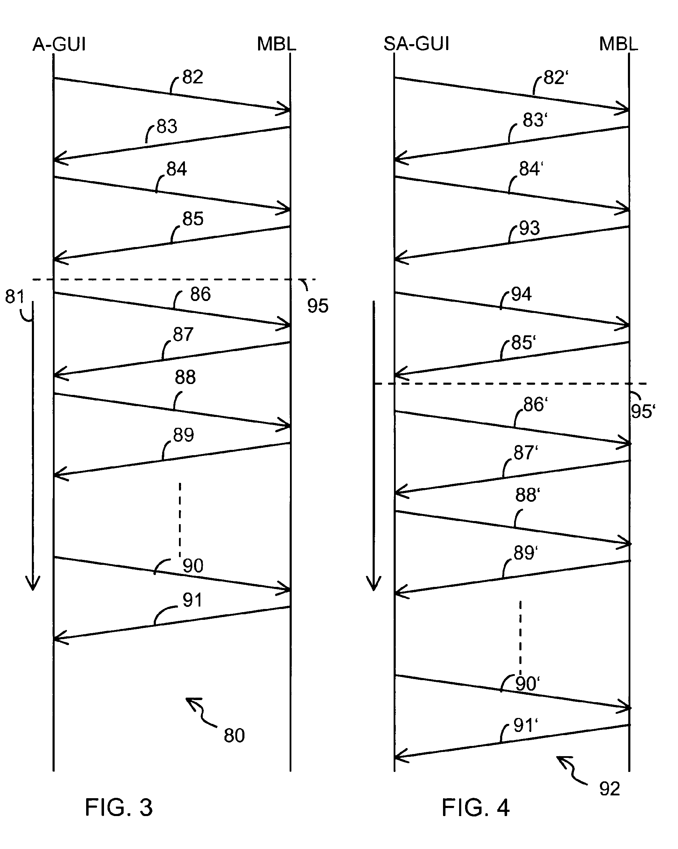

FIG. 2 zeigt schematisch die Datenpräsentation 60 eines Systems zur Administration von Konfigurationsdaten für Dienste gemäß der Erfindung, wobei die Dienste von einer externen Applikation bereitgestellt werden. In diesem Beispiel wird die Management Applikation 62 zur Konfiguration eines Feature-Servers 64 eingesetzt, welcher einen dauerhaften Datenspeicher aufweist. Die Management Applikation wird für zur Konfiguration des Feature-Servers für Kommunikationsdienste eingesetzt, insbesondere für Telefonie-Dienste oder Sprach-Dienste. Im dargestellten Beispiel basiert der Feature-Server 64 auf einer privaten Telekommunikationsanlage PABX (Private Automatic Branch Exchange), die unter anderem Firmentelefonnetze verschiedener Kunden zentral steuert und die erfindungsgemäß modifiziert ist. Die Management Applikation 62 läuft vorzugsweise auf einem Computer, vorzugsweise einer Workstation. Die Management Applikation 62 und der Feature-Server 64 sind über eine Anwendungsschnittstelle API (Application Program Interface) miteinander verbunden.

Die Datenorganisation 66 des Feature-Servers 64 ist derart, dass für jeden Kunden ein Kundendatenbereich 68, 69, 70 auf einem dauerhaften Datenspeicher eingerichtet ist. Jeder Kundendatenbereich 68, 69, 70 enthält Strukturdaten (STR) in einem Strukturdatenabschnitt 71, 72, 73 und Benutzerdaten (UD) in einem Benutzerdatenabschnitt 74, 75, 76. Die Kundendatenbereiche 68, 69, 70 sind wiederum über einen Kundenindex MCI 77, 78, 79 ihren jeweiligen Kunden zugeordnet.

Die Konfiguration des Dienstes wird mittels der Management Applikation 62 kundenindividuell gestaltet, wahlweise durch einen Systemadministrator oder einen Kundenadministrator. Die Konfiguration des Feature-Servers 64 erfolgt mit Konfigurationsdaten für dessen Dienste als Strukturdaten. Die Einstellung von Konfigurationsdaten eines Kunden A, B geschieht, indem ein Kunde ausgewählt wird und sich ein für diesen Kunden berechtigter Administrator dem System gegenüber identifiziert. Die Kundenauswahl kann automatisch mir der Identitätsprüfung eines Kundenadministrators erfolgen, da dieser üblicherweise nur für einen Kunden autorisiert ist. Im Falle eines Systemadministrators wählt dieser den Kunden aus. Mit der Bestimmung des Kunden liegt dessen Kundenindex MCI 77, 78, 79 fest.

Der Administrator hat nun Zugang zu den in eine Datenhaltung der Management Applikation 62 kopierten Konfigurationsdaten und falls der Kunde dies wünscht zu den Benutzerdaten dieses Kunden. Der Administrator stellt nun die gewünschten Konfigurationsdaten ein. Später werden die Konfigurationsdaten von der Management Applikation 62 zu dem Feature-Server 64 übertragen und die alten Konfigurationsdaten werden überschrieben. Der Feature Server arbeitet nun mit den neuen Konfigurationsdaten.

Eine Besonderheit in diesem Beispiel ist, dass der Systemadministrator SA gleichzeitig als Kunde mit dem Kundenindex MCI=0 geführt wird und den Kundendatenbereich 68 für die Systemkonfiguration zur Verfügung hat. In diesem besonderen Kundendatenbereich 68 sind die Kunden als Teilnehmer / Benutzer des Systems abgebildet. Daher erfolgt eine generellen Konfiguration der Kunden mit Konfigurationsdaten, zu denen die Kundenadministratoren keinen Zugriff haben sollen, beispielsweise Hardwarekonfigurationsdaten, im Benutzerdatenabschnitt 74 des Kundendatenbereichs 68 ausschließlich durch den Systemadministrator.

Als Beispiel wird eine Rufumleitung in dem Feature-Server 64 für Kommunikationsdienste, insbesondere Telefonie-Dienste oder Sprach-Dienste, beschrieben. Der Systemadministrator SA meldet sich mittels Account und Passwort als Administrator an, wird damit als Systemadministrator identifiziert, und wählt mittels einer Auswahl-Maske den Kunden A aus. Der Systemadministrator SA richtet nun mittels SA-GUI im Benutzerdatenabschnitt 74 des Kundendatenbereichs 68 als kundenspezifische Konfiguration ein, dass dem Kunden A grundsätzlich das Leistungsmerkmal Rufumleitung zur Verfügung steht. Der Kundenadministrator des Kunden A meldet sich mittels Account und Passwort als Administrator an, womit der Kunde A identifiziert wird. Der Kundenadministrator richtet mittels A-GUI im Strukturdatenabschnitt 72 des Kundendatenbereichs 69 als kundenspezifische Konfiguration die Art der Rufumleitung individuell ein, nämlich für welche Mitarbeiter bzw. für welche Nebenstellen des Kunden A externe oder interne Rufumleitung erlaubt ist. Der Kundenadministrator benutzt dabei zur kundenspezifischen Konfiguration dieselbe Management Applikation wie der Systemadministrator. Ein Mitarbeiter des Kunden A richtet schließlich mittels U-GUI im Benutzerdatenabschnitt 75 ein, wohin ein Ruf umgeleitet wird und ob die Rufumleitung aktiviert ist. Alle Konfigurationsdaten sind nun im dauerhaften Datenspeicher des Feature-Servers abgelegt.

Das erfindungsgemäße Verfahren zur Administration von Konfigurationsdaten für Dienste mit Hilfe einer Management Applikation arbeitet mittels Aufträgen. Vorzugsweise werden Konfigurationsdaten durch einen Hintergrundprozess als Auftrag bereitgestellt, z.B. zyklisch gelesen. Dann werden die Konfigurationsdaten bearbeitet, und mittels Daten-Schreibauftrag abgeschlossen. Gegebenenfalls werden die Konfigurationsdaten eines oder mehrerer Kunden durch mehrere Administratoren gleichzeitig bearbeitet. Die Daten-Schreibaufträge werden sequentiell abgearbeitet, wobei der jeweilige Kunde berücksichtigt wird, indem die Konfigurationsdaten in kundeneigenen Konfigurationsdatenbereichen in einem gemeinsamen Datenspeicher abgelegt werden.

FIG. 3 zeigt ein Message Sequence Chart 80 eines Verfahrens zur Administration von Konfigurationsdaten für Dienste gemäß der Erfindung, wobei die Administration durch einen Kundenadministrator erfolgt. Die Administration kann über das Internet erfolgen, derart, dass eine Applikation als Web-Applikation Web-Seiten bereitstellt, die über ein GUI einem Benutzer angezeigt werden. Dabei navigiert der Benutzer mit einem Browser zu einer Web-Seite und nimmt Eingaben vor, die zu der Web-Applikation übertragen werden und gegebenenfalls eine neue Web-Seite aufrufen. Der Datenaustausch zwischen dem GUI und der Business Logic erfolgt mittels Nachrichten. Der Kundenadministrator benutzt eine Kundenadministrator Bedienoberfläche (A-GUI), wie die A-GUI 28 aus FIG. 1. Die A-GUI kommuniziert in diesem Beispiel über das Internet mit der Management Business Logic MBL, wie der MBL 30 im Back Office 19 aus FIG. 1. Die MBL veranlasst alle notwendigen Interaktionen mit dem Datenzugriff automatisch, weshalb dieser hier nicht dargestellt wird. Das Message Sequence Chart 80 zeigt die Nachrichten (Messages) zwischen dem GUI und der MBL entsprechend dem chronologischen Ablauf. Normalerweise treten die Nachrichten in Paaren auf, wobei auf eine Anforderung vom GUI eine Antwort von der MBL erfolgt.

Zu Beginn navigiert der Kundenadministrator zur Administrationsberechtigungs-Web-Seite, die das GUI mit einer Nachricht 82 anfordert. Die MBL antwortet mit einer Nachricht 83 zur Anzeige der Administrationsberechtigungs-Web-Seite. Der Kundenadministrator loggt sich nun ein und das GUI sendet eine entsprechende Nachricht 84. Die MBL prüft die Berechtigung des Kundenadministrators anhand der Nachricht 84 und ermittelt anhand der Kenndaten des Kundenadministrators den Kunden, repräsentiert durch dessen MCI, und bestätigt die Berechtigung mit einer Nachricht 85 zur Anzeige der Administrations-Web-Seite.

Die Administrations-Web-Seite ermöglicht die Anzeige und Änderung von Konfigurationsdaten durch übliche Internet-Navigation mit der Hilfe von nachgeordneten Web-Seiten, welche kontextabhängig mittels Nachrichten 86 vom GUI angefordert und mittels Nachricht 87 von der MBL zur Anzeige gebracht werden. Dabei arbeitet die MBL vorzugsweise mit einer Kopie der Konfigurationsdaten im einem Zwischenspeicher, auf der die neue bzw. geänderte Konfiguration erstellt wird. Änderungen von Konfigurationsdaten werden mittels Nachricht 88 vom GUI an die MBL übermittelt und mittels Nachricht 89 von der MBL bestätigt. Die MBL sorgt für das korrekte Abspeichern der geänderten Daten. Die Nachrichten 86 bis 89 können sich bedarfsgemäß wiederholen, bis alle Änderungen vorgenommen worden sind. Die geänderte Konfiguration wird zunächst im MBL zwischengespeichert und auf Anforderung vom GUI mittels Nachricht 90 von der MBL permanent gespeichert durch Überschreiben der alten Konfiguration. Dies wird mittels Nachricht 91 von der MBL bestätigt. Die Trennlinie 95 markiert den Zeitpunkt, ab dem Konfigurationsdaten geändert werden.

In einer bevorzugten Ausführungsform, vorteilhaft eingesetzt etwa im in FIG. 2 beschriebenen Beispiel, wird die geänderte Konfiguration zunächst in der MBL permanent zwischengespeichert und auf Anforderung vom GUI mittels Nachricht 90 zum Überschreiben der alten Konfiguration durch die MBL freigegeben. Dies wird mittels Nachricht 91 von der MBL bestätigt. Das Überschreiben der alten Konfiguration erfolgt später in verkehrsarmer Zeit. Die neue Konfiguration etwa der PABX in FIG. 2 ist z.B. am nächsten Tag verfügbar, ohne dass die normale Funktion der PABX in Spitzenlastzeiten beeinträchtigt war trotz großer übertragener Datenmengen.

In einer weiteren vorteilhaften Ausgestaltung wird ein Konsistenztest der Konfigurationsdaten vor Überschreiben der alten Konfigurationsdaten durchgeführt.

FIG. 4 zeigt ein Message Sequence Chart 92 eines Verfahrens zur Administration von Konfigurationsdaten für Dienste gemäß der Erfindung, wobei die Administration durch einen Systemadministrator erfolgt. Der Systemadministrator benutzt dazu eine Systemadministrator Bedienoberfläche (SA-GUI), wie die SA-GUI 27 aus FIG. 1. Das Message Sequence Chart 92 enthält im wesentlichen die gleichen Nachrichten wie das Message Sequence Chart 80 aus FIG. 3 mit denselben gestrichenen Bezugsziffern und zusätzlich die neuen Nachrichten 93 und 94. Im Fall des Systemadministrators ist der Kunde nämlich nicht dem Administrator zugeordnet wie im Fall des Kundenadministrators, und daher ergibt sich der Kunde nicht durch die Kennung des Systemadministrators, sondern muss nach dessen Berechtigungsprüfung, also nach Nachricht 84', abgefragt werden. Dazu erfolgt mittels Nachricht 93 die Anzeige einer Kundenauswahl-Web-Seite. Die Kundenauswahl wird vom GUI mittels Nachricht 94 übermittelt, und bestätigt mit der Nachricht 85' zur Anzeige der Administrations-Web-Seite. Die Administrations-Web-Seite kann für den Systemadministrator anders aussehen als für den Kundenadministrator, falls die Management Applikation Konfigurationsdaten aufweist, die nur dem Systemadministrator zugänglich sind. Entsprechend können die Nachrichten unterhalb der Trennlinie 95' Daten umfassen, die im Message Sequence Chart 80 nicht betroffen sind.

FIG. 3 und 4 verdeutlichen, wie wenig Modifikationen in der MBL und dem GUI erfindungsgemäß notwendig sind, um die Transformation vom Ein-Kunden-System zum Mehr-Kunden-System zu erreichen. Einerseits kann im wesentlichen das GUI des Administrators des Ein-Kunden-Systems mit minimalen Änderungen für das Mehr-Kunden-System verwendet werden. Andererseits sind das A-GUI und das SA-GUI größtenteils identisch. Das GUI des Administrators des Ein-Kunden-Systems kann normalerweise direkt als A-GUI verwendet werden und das SA-GUI erhält nur eine zusätzliche Bildschirmabfrage zur Kundenauswahl. Bei dieser Transformation vom Ein-Kunden-System zum Mehr-Kunden-System ändern sich weder Struktur noch Inhalte der ausgetauschten Meldungen. Ob der Systemadministrator bzw. dessen SA-GUI über das Internet oder ein Intranet mit der MBL kommuniziert, ist nicht relevant, da in beiden Fällen das Internet-Protokoll verwendet wird.

Die angezeigten Seiten des GUI enthalten vorzugsweise Bildschirm-Masken, die kontextabhängig zusammengestellte Daten darstellen und editierbar machen. Solche Masken werden vom Back Office bereitgestellt und mittels IP im Internet übertragen. Alternativ kann ein Offline-Modus mittels einem zusätzlichen Programm bereitgestellt werden. Die Datenübertragung kann alternativ mittels einer Wählverbindung erfolgen. Die Bildschirm-Masken der Kundenadministratoren können aufgrund einer durch den Systemadministrator erfolgten Konfiguration des Kunden auf den speziellen Kunden hin ausgerichtet werden.

Die Erfindung ermöglicht es, ein bestehendes Ein-Kunden-System mit minimalen Änderungen, darunter zusätzlichen Masken, derart umzugestalten, dass die Datenspeicherung und die Rechnerleistung kostengünstig außerhalb der Firma des Kunden erbracht werden können.

Aus Sicht der Software-Schichten wird eine bestehende Applikation mit zugehöriger Management Applikation um ein neues Modul erweitert. Das GUI wird um die Unterscheidung zwischen Systemadministrator und Kundenadministrator und um eine Auswahlmaske für den Systemadministrator zur Auswahl des Kunden erweitert. Die BL wird um eine Liste von Kunden erweitert. Der Datenzugriff wird um Meldungen erweitert, die den Kundenindex MCI einstellen.

Aus Sicht der Programmierung sind in Bezug auf die Management Applikation die Strukturen zum Message Sequence Chart 92 und zum Message Sequence Chart 80 identisch, zur Laufzeit muss lediglich eine Instanz mittels des Kundenindex MCI ausgewählt werden. Während der Laufzeit existiert eine Instanz der Management Applikation mit einer einzigen systembezogenen Struktur, auf die mehrere Administratoren zugreifen können. So greifen etwa Systemadministrator und Kundenadministrator auf dieselbe systembezogene Struktur zu, ggf. mit Beschränkungen auf Teilmengen.

### Bezugszeichenliste

Mehr-Kunden-System 10
Kunden 12, 14
Applikation 16
Management Applikation 18
Back Office BO 19
Bedienoberfläche (U-GUI) 20
Business Logic (BL) 22
Datenzugriff (D) 24
Datenspeicher 26
Bedienoberfläche (SA-GUI) 27
Bedienoberfläche (A-GUI) 28
Management Business Logic (MBL) 30
Datenzugriff (D) 32
Organisation 33 des Datenspeichers
Kundendatenbereich 34, 36
Strukturdatenabschnitt 44, 46
Benutzerdatenabschnitt 48, 50
Kundenindex MCI 52, 54
Pfeile 56, 58
Datenpräsentation 60
Management Applikation 62
Feature-Server 64
Datenorganisation 66
Kundendatenbereich 68, 69, 70
Strukturdatenabschnitt 71, 72, 73
Benutzerdatenabschnitt 74, 75, 76
Kundenindex MCI 77, 78, 79
Message Sequence Chart 80, 92
Ablauf 81 der Zeit t
Nachricht 82, 83, 84, 85, 86, 87, 88, 89,
90, 91
Trennlinie 95
System 100
Kunde 101
Applikation 102
Applikation 104
Bedienoberfläche (U-GUI) 106
Business Logic (BL) 108
Datenzugriff (D) 110
Datenspeicher 111
Bedienoberfläche (A-GUI) 112
Management Business Logic (MBL) 114
Datenzugriff (D) 116
Strukturdatenbereich 118
Pfeil 120, 124, 126
Benutzerdatenbereich 122
Organisation 128 des Datenspeichers
System 140
Kunden 142, 144
Applikation 146
Management Applikation 148
Bedienoberfläche (U-GUI) 150
Business Logic (BL) 152
Datenzugriff (D) 154
Datenspeicher 158
Bedienoberfläche (SA-GUI) 160
Bedienoberfläche (A-GUI) 162
Management Business Logic (MBL) 164
Datenzugriff (D) 166
Pfeil 170, 174, 176
Benutzerdatenbereich 172
Organisation 178 des Datenspeichers

Kundendatenteilbereiche 180, 182

## Patentansprüche

1. Verfahren zur Administration von Konfigurationsdaten für Dienste mit Hilfe einer Management Applikation (18, 62), wobei die Management Applikation als Schichten eine Bedienoberfläche (27, 28), eine Business Logic (22) und einen Datenzugriff (24) auf einen dauerhaften Datenspeicher (26) aufweist,
**dadurch gekennzeichnet, dass** ein Kundenindex (52, 54) in den Schichten der Management Applikation eingeführt wird, mit dem für mehrere Kunden (12, 14) mit derselben Management Applikation eine kundenspezifische Konfiguration erfolgt, wobei die Konfigurationsdaten in kundeneigenen Konfigurationsdatenbereichen (34, 36, 68, 69, 70) in einem gemeinsamen Datenspeicher (26) abgelegt werden.

2. Verfahren nach Anspruch 1, **dadurch gekennzeichnet, dass** eine kundenspezifische Konfiguration jeweils durch einen Kundenadministrator des Kunden erfolgt.

3. Verfahren nach Anspruch 1 oder 2, **dadurch gekennzeichnet, dass** ein Kunde durch ein Account und ein Passwort identifiziert wird.

4. Verfahren nach einem der vorhergehenden Ansprüche, **dadurch gekennzeichnet, dass** eine kundenspezifische Konfiguration durch einen Systemadministrator erfolgt, wobei ein Kunde mittels einer Auswahl-Maske ausgewählt wird.

5. Verfahren nach einem der vorhergehenden Ansprüche, **dadurch gekennzeichnet, dass** eine kundenspezifische Konfiguration durch einen Kundenadministrator oder einen Systemadministrator erfolgt, wobei beide dieselbe Management Applikation, insbesondere identische Softwareabschnitte, benutzen.

6. Verfahren nach einem der vorhergehenden Ansprüche, **dadurch gekennzeichnet, dass** die Management Applikation zur Konfiguration eines den dauerhaften Datenspeicher (26) aufweisenden Feature-Servers (64) eingesetzt wird.

7. Verfahren nach Anspruch 6, **dadurch gekennzeichnet, dass** die Management Applikation zur Konfiguration des Feature-Servers (64) für Kommunikationsdienste eingesetzt wird.

8. Verfahren nach einem der vorhergehenden Ansprüche, **dadurch gekennzeichnet, dass** das Verfahren zur Administration von Konfigurationsdaten für Telefonie-Dienste oder Sprach-Dienste eingesetzt wird.

9. Verfahren nach einem der vorhergehenden Ansprüche, **dadurch gekennzeichnet, dass** das Verfahren zur Transformation eines Ein-Kunden-Systems in ein Mehr-Kunden-System eingesetzt wird.
